# EUROPEAN PATENT APPLICATION

(11) **EP 2 708 431 A2**
(43) Date of publication of application: **19.03.2014**
(21) Application number: 13184525.7
(22) Date of filing: 16.09.2013
(51) Int. Cl.: B60W 40/02

(54) **Device and method for automatically determining whether a vehicle is in left-hand traffic or right-hand traffic**

(30) Priority: 17.09.2012 SE 1251034
(71) Applicant: Scania CV AB, 151 87 Södertälje (SE)
(72) Inventor: Oremus, Sebastiaan, SE-15257 Södertäle (SE)

(57) **Abstract**

The invention relates to a method for automatically determining whether a vehicle (100; 110) is in left-hand traffic or right-hand traffic. The method comprises the step of
- detecting (s401) vehicle movements in at least one type of manoeuvre situation by means of at least one sensor configuration (251; 252; 253) for sensing changes in direction of said vehicle (100; 110) as a basis for said determination.

The invention relates also to a computer programme product comprising programme code (P) for a computer (200; 210; 500) for implementing a method according to the invention. The invention relates also to a device (299) and a motor vehicle (100; 110) equipped with the device (299).

## Description

### TECHNICAL FIELD

The present invention relates to a method for automatically determining whether a vehicle is in left-hand traffic or right-hand traffic. The invention relates also to a computer programme product comprising programme code for a computer for implementing a method according to the invention. The invention also relates to a device for automatically determining whether a vehicle is in left-hand traffic or right-hand traffic and to a motor vehicle equipped with the device.

### BACKGROUND

Different regulations currently apply in different countries as regards right-hand traffic and left-hand traffic. In certain countries vehicles have to travel in left-hand traffic and in certain countries in right-hand traffic.

In vehicles, e.g. heavy vehicles such as trucks, a setting of control means pertains to the respective regulations with regard to whether the vehicle is to travel in left-hand traffic or right-hand traffic. Said setting may serve as a basis for a number of control functions of the vehicle's control system.

One example of such a control function may be a lighting function which takes care of settings of the vehicle's headlamps, which may thus be directed in one way in left-hand traffic and another way in right-hand traffic.

Another example of such a control function may be an adaptive cruise control, in which case a setting of sensor means may differ between travelling in left-hand traffic and right-hand traffic.

A further example of a control function may be a so-called lane departure warning, in which case a setting of sensor means may differ between travelling in left-hand traffic and right-hand traffic. Said so-called lane departure warning may be a function of the vehicle which is adapted to continuously deciding whether the vehicle is within the limits of a certain traffic lane.

The vehicle may currently determine from GPS signals received whether it is in an area where left-hand traffic or right-hand traffic prevails. An example of such technology is described in US6114973.

In one known technology the vehicle may use an onboard camera or radar unit to obtain for analysis a picture of the surroundings, making it possible for example to identify locations of nearby objects, e.g. road signs, in order to determine whether it is likely that right-hand traffic or left-hand traffic prevails. Said camera and radar unit with such software for analysis are relatively expensive to purchase and install. An example of such technology is described in JP2005104462.

### SUMMARY OF THE INVENTION

One object of the present invention is to propose a novel and advantageous method for automatically determining whether a vehicle is in left-hand traffic or right-hand traffic.

Another object of the present invention is to propose a novel and advantageous device and a novel and advantageous computer programme for automatically determining whether a vehicle is in left-hand traffic or right-hand traffic.

A further object of the invention is to propose a method, a device and a computer programme for automatically determining in a reliable way whether a vehicle is in left-hand traffic or right-hand traffic.

A further object of the invention is to propose a method, a device and a computer programme for making a supplementary automatic determination of whether a vehicle is in left-hand traffic or right-hand traffic.

A further object of the invention is to propose a method, a device and a computer programme for making an alternative automatic determination of whether a vehicle is in left-hand traffic or right-hand traffic.

These objects are achieved with a method for automatically determining whether a vehicle is in left-hand traffic or right-hand traffic according to claim 1.

One aspect of the invention proposes a method for automatically determining whether a vehicle is in left-hand traffic or right-hand traffic, comprising the step of
- detecting vehicle movements in at least one type of manoeuvre situation by means of at least one sensor configuration in order to sense a change in said vehicle's direction of movement as a basis for said determination.

The result is a redundant method for automatically determining whether the vehicle is in left-hand traffic or right-hand traffic, which method does not require the driver's attention or active involvement.

The result is a method for sensing whether a vehicle is in left-hand traffic or right-hand traffic in cases where it is necessary to use an expensive radar unit or camera. Also proposed is a method according to the invention for making said determination independently of GPS signals.

Said at least one type of manoeuvre situation may be chosen from among negotiating a roundabout, turning at an intersection and/or overtaking. The result is a versatile method whereby different vehicle movements before, during and after certain manoeuvre situations may serve as a basis for said determination. Catering for a number of different types of manoeuvre situations makes it possible to achieve a result of relatively high probability with regard to determining whether the vehicle is in left-hand traffic or right-hand traffic.

The manoeuvre of negotiating a roundabout may be distinguished by a first turn in the same direction as the respective type of traffic, followed by a second turn in the opposite direction and a third turn in the same direction as said first turn. It is thus possible to determine clearly during a manoeuvre a pattern of movement which contributes to reliably making said determination of whether the vehicle is in right-hand traffic or left-hand traffic.

Said at least one sensor configuration may be chosen from among wheel speed sensor configuration, yaw sensor and/or steer (steering wheel angle) sensor. All of said sensors may currently continuously provide reliable measurements. The method makes it possible to use one, two or three sensor configurations to provide data and the vehicle's pattern of movement in certain types of manoeuvre situations.

A turn may be detected by said wheel speed sensor configuration as a speed difference between right wheels and left wheels, in which case it is determined that said turn is in the same direction as the wheel with the lowest speed. This involves taking into account that the respective speeds of right and left wheels on certain vehicles will differ. In cases for example where a differential lock is activated it is for example possible to use information from a steer sensor and/or yaw sensor instead of said wheel speed sensor configuration.

The magnitude of the speed difference may serve as a measurement of the radius of curvature of the turn, in which case said turning direction and said radius of curvature serve as a basis for said determination.

The basis for said determination may comprise activity of the vehicle's direction indicators, thereby providing a control function which makes it possible with a greater degree of assurance to determine whether right-hand traffic or left-hand traffic prevails when the vehicle is executing a certain type of manoeuvre, e.g. turning at an intersection.

The basis for said determination may comprise clear changes in the vehicle's speed, e.g. decelerations and/or accelerations.

The method is easy to implement in existing motor vehicles. Software for determining whether a vehicle is in left-hand traffic or right-hand traffic according to the invention may be installed in a control unit of the vehicle during the manufacture of the vehicle. A purchaser of the vehicle may thus have the possibility of selecting the function of the method as an option. Alternatively, software which comprises programme code for conducting the innovative method for determining whether a vehicle is in left-hand traffic or right-hand traffic may be installed in a control unit of the vehicle on the occasion of upgrading at a service station, in which case the software may be loaded into a memory in the control unit. Implementing the innovative method is therefore cost-effective.

Software which comprises programme code for determining whether a vehicle is in left-hand traffic or right-hand traffic is easy to update or replace. Moreover, different parts of the software which comprises programme code for determining whether a vehicle is in left-hand traffic or right-hand traffic may be replaced independently of one another. This modular configuration is advantageous from a maintenance perspective.

One aspect of the invention proposes a device for automatically determining whether a vehicle is in left-hand traffic or right-hand traffic. The device comprises means for detecting vehicle movements in at least one type of manoeuvre situation by means of at least one sensor configuration for sensing changes in said vehicle's direction of movement as a basis for said determination.

The device may comprise
- means for choosing said at least one type of manoeuvre situation from among negotiating a roundabout, turning at an intersection and/or overtaking.

The device may comprise
- means for determining the manoeuvre situation of negotiating a roundabout on the basis of vehicle movements distinguished by a first turn in the same direction as the respective type of traffic, followed by a second turn in the opposite direction and a third turn in the same direction as the first said turn.

Said at least one sensor configuration may comprise any from among wheel speed sensor configuration, yaw sensor and/or steer (steering wheel angle) sensor.

The device may comprise
- means for detecting a turn as a speed difference between right and left wheels, and
- means for determining that said turn is in the same direction as the wheel with the lowest speed.

The device may comprise
- means for taking the magnitude of the speed difference as a measurement of the radius of curvature of the turn, and
- means for using said turning direction and said radius of curvature as a basis for said determination.

The device may comprise
- means for determining activity of the vehicle's direction indicators, and
- means for determining whether the vehicle is in left-hand traffic or right-hand traffic on the basis of said direction indicator activity determined.

The device may comprise
- means for determining clear changes in the vehicle's speed, and
- means for determining whether the vehicle is in left-hand traffic or right-hand traffic on the basis of said clear speed changes determined, e.g. decelerations and/or accelerations.

The above objects are also achieved with a motor vehicle provided with a device for automatically determining whether a vehicle is in left-hand traffic or right-hand traffic. The vehicle may be any from among truck, bus or car.

One aspect of the invention is a proposed computer programme for determining whether a vehicle is in left-hand traffic or right-hand traffic, which programme comprises programme code stored on a computer-readable medium for causing an electronic control unit or another computer connected to the electronic control unit to perform steps according to any one of claims 1-8.

One aspect of the invention is a proposed computer programme for determining whether a vehicle is in left-hand traffic or right-hand traffic, which programme comprises programme code for causing an electronic control unit or another computer connected to the electronic control unit to perform steps according to any one of claims 1-8.

One aspect of the invention is a proposed computer programme product comprising a programme code stored on a computer-readable medium for performing method steps according to any one of claims 1-8 when said programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations within other fields, which are within the scope of the invention.

### BRIEF DESCRIPTION OF THE DRAWINGS

For fuller understanding of the present invention and its further objects and advantages, the detailed description set out below should be read in conjunction with the accompanying drawings, in which the same reference notations pertain to similar items in the various diagrams,
Figure 1 schematically illustrates a vehicle according to an embodiment of the invention,
Figure 2 schematically illustrates a subsystem for the vehicle depicted in Figure 1, according to an embodiment of the invention,
Figure 3a schematically illustrates a manoeuvre situation according to an aspect of the present invention,
Figure 3b schematically illustrates a manoeuvre situation according to an aspect of the present invention,
Figure 3c schematically illustrates a manoeuvre situation according to an aspect of the present invention,
Figure 3d schematically illustrates a manoeuvre situation according to an aspect of the present invention,
Figure 3e schematically illustrates a manoeuvre situation according to an aspect of the present invention,
Figure 3f schematically illustrates a manoeuvre situation according to an aspect of the present invention,
Figure 4a is a schematic flowchart of a method according to an embodiment of the invention,
Figure 4b is a more detailed schematic flowchart of a method according to an embodiment of the invention, and
Figure 5 schematically illustrates a computer according to an embodiment of the invention.

### DETAILED DESCRIPTION OF THE DRAWINGS

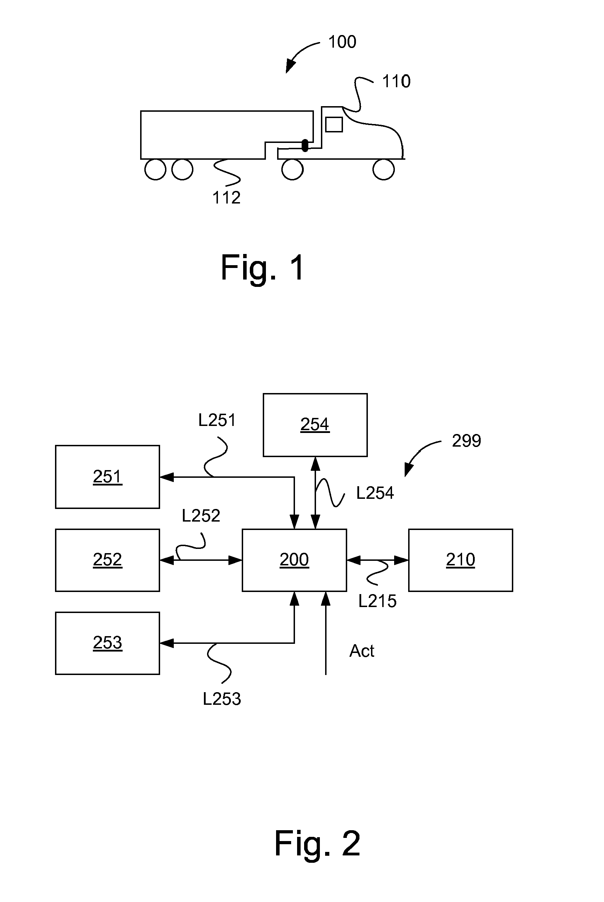

Figure 1 depicts a side view of a vehicle 100. The vehicle here exemplified comprises a tractor unit 110 and a trailer 112. It may be a heavy vehicle, e.g. a truck or a bus. It may alternatively be a car.

The term "link" refers herein to a communication link which may be a physical connection such as an opto-electronic communication line, or a non-physical connection such as a wireless connection, e.g. a radio link or microwave link.

Figure 2 depicts a device 299 for determining whether a vehicle is in left-hand traffic or right-hand traffic. In this embodiment example the vehicle has four wheels arranged in pairs on two of its wheelshafts, viz. a forward wheelshaft and a rear wheelshaft (not depicted).

The device 299 is provided with a first sensor configuration 251 which in one example comprises a set of wheel speed sensors. Said first sensor configuration 251 is adapted to determining prevailing speeds of wheels in at least one of the vehicle's wheel pairs.

In a first embodiment said first sensor configuration 251 is adapted to continuously determining a prevailing speed VFL of a forward left vehicle wheel and a prevailing speed VFR of a forward right vehicle wheel.

In a second embodiment said first sensor configuration 251 is adapted to continuously determining a prevailing speed VRL of a rear left vehicle wheel and a prevailing speed VRR of a rear right vehicle wheel.

In a third embodiment said first sensor configuration 251 is adapted to continuously determining a prevailing speed VFL of said forward left vehicle wheel, a prevailing speed VFR of said forward right vehicle wheel, a prevailing speed VRL of said rear left vehicle wheel and a prevailing speed VRR of said rear right vehicle wheel.

Said first sensor configuration 251 is arranged for communication with a first control unit 200 via a link L251 via which it is adapted to continuously sending signals containing information about said wheel speeds VFL, VFR, VRL and VRR determined to said first control unit.

The first control unit 200 is adapted to determining a difference between said wheel speeds determined on wheel pairs associated in pairs. The first control unit is in one example adapted to determining a difference between the speeds VFL and VFR. The first control unit is in one example adapted to determining a difference between the speeds VRL and VRR. It should be noted that in certain circumstances a wheel on the side which corresponds to the direction in which the vehicle is turning will have a lower speed than a wheel on an opposite side of the vehicle.

The first control unit 200 is in one version adapted to using a speed difference determined between a right wheel and a left wheel on a wheelshaft as a basis for determining a measurement which represents a radius of curvature of a turn which the vehicle is executing. The first control unit is in one version adapted to using a difference determined between a right wheel and a left wheel on a wheelshaft as a basis for determining a direction of the turn which the vehicle is executing.

A larger radius of curvature corresponds for example to a left turn in right-hand traffic. A larger radius of curvature corresponds for example to a right turn in left-hand traffic. A shorter radius of curvature corresponds for example to a right turn in right-hand traffic. A shorter radius of curvature corresponds for example to a left turn in left-hand traffic.

In this case the first control unit 200 is thus adapted both to determining which direction the vehicle is turning and to determining the turning radius of said turn. It is thus adapted to determining whether said vehicle is in right-hand or left-hand traffic.

The device 299 is provided with a second sensor configuration 252 comprising a yaw sensor and adapted to continuously determining a prevailing yaw of the vehicle. It is adapted to continuously determining a prevailing yaw rate of the vehicle.

Said second sensor configuration 252 is arranged for communication with said first control unit 200 via a link L252 via which it is adapted to continuously sending signals containing information about said yaw determined and/or said yaw rate determined to said first control unit.

The first control unit 200 is in one version adapted to using said yaw determined and/or said yaw rate determined as a basis for determining a measurement which represents a radius of curvature of a turn which the vehicle is executing. The first control unit is in one version adapted to using said yaw determined and/or said yaw rate determined as a basis of determining a direction of the turn which the vehicle is executing.

In this case the first control unit 200 is thus adapted both to determining which direction the vehicle is turning and to determining the turning radius of said turn. It is thus adapted to determining whether said vehicle is in right-hand or left-hand traffic.

The device 299 is provided with a third sensor configuration 253 comprising a steering wheel angle sensor and adapted to continuously determining a prevailing steer of the vehicle. It is adapted to continuously determining a prevailing steer rate of the vehicle.

Said third sensor configuration 253 is arranged for communication with said first control unit 200 via a link L253 via which it is adapted to continuously sending signals containing information about said steer determined and/or said steer rate determined to said first control unit.

The first control unit 200 is in one version adapted to using said steer determined and/or said steer rate determined as a basis for determining a measurement which represents a radius of curvature of a turn which the vehicle is executing. The first control unit is in one version adapted to using said steer determined and/or said steer rate determined as a basis of determining a direction of the turn which the vehicle is executing.

In this case the first control unit 200 is thus adapted both to determining which direction the vehicle is turning and to determining the turning radius of said turn. It is thus adapted to determining whether said vehicle is in right-hand or left-hand traffic.

The first control unit 299 is provided with a fourth sensor configuration 254 comprising a vehicle speed sensor and adapted to continuously determining a prevailing speed V of the vehicle. Said fourth sensor configuration is adapted to continuously determining a prevailing acceleration A of the vehicle.

Said fourth sensor configuration 254 is arranged for communication with said first control unit 200 via a link L254 via which it is adapted to continuously sending signals containing information about said vehicle speed V determined and/or said vehicle acceleration A determined to said first control unit.

The first control unit 200 is in one version adapted to using said vehicle speed V determined and/or said vehicle acceleration A determined as a basis for determining clear changes in the vehicle's speed. Said clear speed changes may comprise braking before, during or after manoeuvre situations during which there is to be determination whether the vehicle is in right-hand traffic or left-hand traffic.

In one example a braking determined before entering a gyratory system may serve as a basis for determining that the vehicle is actually being driven in a way appropriate to a manoeuvre of negotiating a roundabout.

In one example a braking determined before entering a road intersection may serve as a basis for determining that the vehicle is actually being driven in a way appropriate to a manoeuvre of negotiating an interesection.

In one example an acceleration determined during overtaking of a vehicle may serve as a basis for determining that the vehicle is actually being driven in a way appropriate to an overtaking manoeuvre.

In this case the first control unit 200 is thus adapted to determining whether it is likely that the vehicle is in a type of manoeuvre situation according to an aspect of the invention. It is thus adapted to determining with a certain degree of assurance whether said vehicle is in right-hand or left-hand traffic.

In one embodiment example the first control unit 200 is adapted to receiving information about means (not depicted) for determining direction indicator activity Act of the vehicle. Said means may comprise a control unit of the vehicle and be adapted to determining whether a driver has manually activated or deactivated the vehicle's flashers. Said activation and/or deactivation of the flashers may serve as a basis for determining whether it is likely that the vehicle is in a type of manoeuvre situation according to an aspect of the present invention. Said direction indicator activity Act may thus indicate whether the driver intends to turn left or right. In this case the first control unit is adapted to determining with a certain degree of assurance whether said vehicle is in right-hand traffic or left-hand traffic.

In one aspect of the invention said vehicle speed determined, vehicle acceleration determined and/or direction indicator activity Act determined may serve as a basis for determining whether the vehicle is in right-hand traffic or left-hand traffic in conjunction with information determined by said first sensor configuration 251, second sensor configuration 252 and/or third sensor configuration 253.

A second control unit 210 is arranged for communication with the first control unit 200 via a link L215. The second control unit may be detachably connected to the first control unit. It may be situated externally to the vehicle 100. It may be adapted to conducting the innovative method steps according to the invention. It may be used to crossload software to the first control unit, particularly software for conducting the innovative method. It may alternatively be arranged for communication with the first control unit via an internal network of the vehicle. It may be adapted to performing substantially similar functions to the first control unit, e.g. detecting vehicle movements in at least one type of manoeuvre situation by means of at least one from among the first sensor configuration 251, the second sensor configuration 252 and the third sensor configuration 253 in order to determine changes in said vehicle's direction as a basis for determining whether it is in right-hand or left-hand traffic.

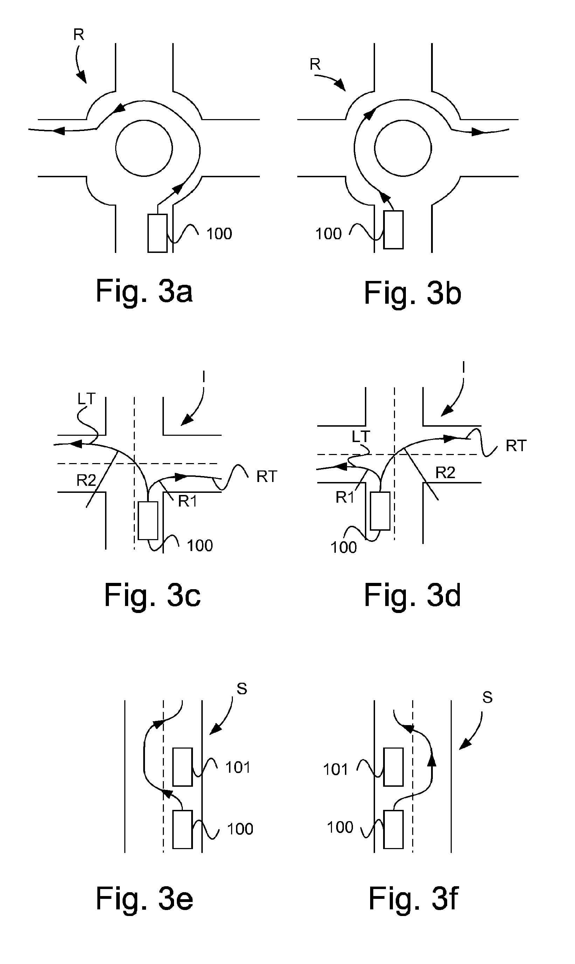

Figure 3a illustrates schematically a first type of manoeuvre situation according to an aspect of the present invention.

This example illustrates the vehicle in a first manoeuvre situation of turning left at a roundabout R. In this example the vehicle is in right-hand traffic.

The manoeuvre of turning left at a roundabout in right-hand traffic is distinguished by a first turn to the right followed by a second turn to the left and a third turn to the right.

Said first type of manoeuvre may be preceded by a clear braking of the vehicle before it enters the roundabout R.

As alternative types of manoeuvre at a roundabout, the vehicle may of course travel straight on or turn right at the roundabout.

Figure 3b illustrates schematically a second type of manoeuvre according to an aspect of the present invention.

This example illustrates the vehicle in a second manoeuvre situation of turning right at a roundabout R. In this example the vehicle is in left-hand traffic.

The manoeuvre of turning right at a roundabout in left-hand traffic is distinguished by a first turn to the left followed by a second turn to the right and a third turn to the left.

Said second type of manoeuvre may be preceded by a clear braking of the vehicle before it enters the roundabout R.

As alternative types of manoeuvre at a roundabout, the vehicle may of course travel straight on or turn left at the roundabout.

Figure 3c illustrates schematically a third type of manoeuvre according to an aspect of the present invention.

This example illustrates the vehicle in a third type of manoeuvre situation of turning right RT or left LT at a road intersection I. In this example the vehicle is in right-hand traffic.

During said right turn RT the vehicle will for a certain distance travel along a path corresponding to a radius of curvature R1.

During said left turn LT the vehicle will for a certain distance travel along a path corresponding to a radius of curvature R2.

Said third type of manoeuvre may be preceded by a clear braking of the vehicle before it executes said left turn LT or right turn RT.

Figure 3d illustrates schematically a fourth type of manoeuvre according to an aspect of the present invention.

This example illustrates the vehicle in a fourth type of manoeuvre situation of turning right RT or left LT at a road intersection I. In this example the vehicle is in left-hand traffic.

During said right turn RT the vehicle will for a certain distance travel along a path corresponding to a radius of curvature R2.

During said left turn LT the vehicle will for a certain distance travel along a path corresponding to a radius of curvature R1.

Said fourth type of manoeuvre may be preceded by a clear braking of the vehicle before it executes said left turn LT or right turn RT.

Figure 3e illustrates schematically a fifth type of manoeuvre according to an aspect of the present invention.

This example illustrates the vehicle in a fifth manoeuvre situation of overtaking on a road S with more than one traffic lane in the same direction. In this example the vehicle is in right-hand traffic.

Said fifth type of manoeuvre comprises a driving pattern defined by a lateral movement to the left before overtaking, followed by a lateral movement to the right after said overtaking. The overtaking may comprise a clear acceleration of the vehicle.

Figure 3f illustrates schematically a type of manoeuvre according to an aspect of the present invention.

This example illustrates the vehicle executing a sixth type of manoeuvre situation of overtaking on a road S with more than one traffic lane in the same direction. In this example the vehicle is in left-hand traffic.

Said sixth type of manoeuvre comprises a driving pattern defined by a lateral movement to the right before overtaking, followed by a lateral movement to the left after said overtaking. The overtaking may comprise a clear acceleration of the vehicle.

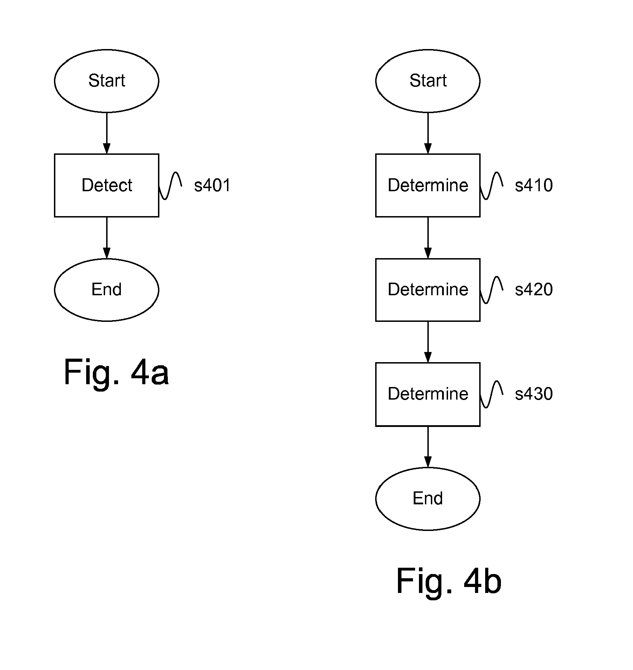

Figure 4a is a schematic flowchart of a method for automatically determining whether a vehicle is in left-hand traffic or right-hand traffic, according to an embodiment of the invention. The method comprises a first step s401 comprising the step of
- detecting vehicle movements during at least one type of manoeuvre by means of at least one sensor configuration for sensing changes in direction of said vehicle as a basis for said determination. The method ends after step s401.

Figure 4b is a schematic flowchart of a method for automatically determining whether a vehicle is in left-hand traffic or right-hand traffic, according to an embodiment of the invention.

The method comprises a first step s401 comprising the step of continuously determining movements of the vehicle 100 on the basis of information from said first sensor configuration 251, second sensor configuration 252 and/or third sensor configuration 253. Step s410 is followed by a step s420.

Method step s420 comprises the step of determining whether with a certain degree of assurance it is likely that a predetermined type of manoeuvre will be, is being or has been executed. This may be determined on the basis of data about said direction indicator activity Act, vehicle speed V and/or vehicle acceleration A. Step s420 is followed by a step s430.

Method step s430 comprises the step of determining whether the vehicle is in right-hand traffic or left-hand traffic on the basis of said vehicle movements determined. This step may comprise determining whether the vehicle is in right-hand traffic or left-hand traffic on the basis of said movements determined and said data about said direction indicator activity Act, vehicle speed V and/or vehicle acceleration A. Step s430 may comprise the step of using a result of said determination of whether the vehicle is in right-hand traffic or left-hand traffic in suitable vehicle functions, e.g. automatic headlamp settings or a support function, e.g. in the form of a so-called lane departure warning. The method ends after step s430.

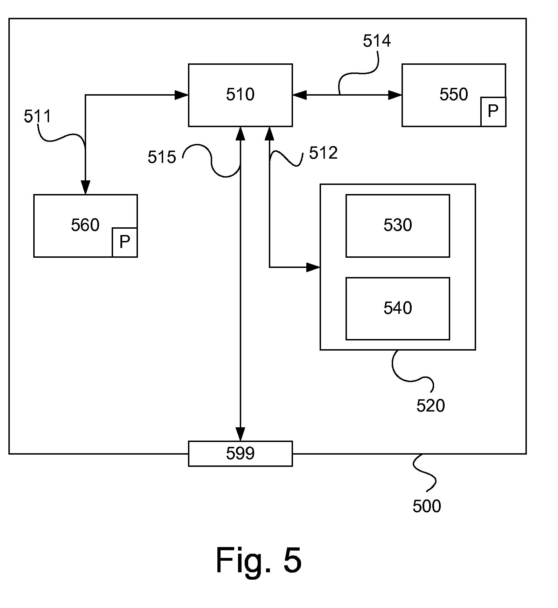

Figure 5 is a diagram of a version of a device 500. The control units 200 and 210 described with reference to Figure 2 may in one version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

The computer programme P comprises routines for automatically determining whether a vehicle 100 is in left-hand traffic or right-hand traffic.

The computer programme P comprises routines for detecting vehicle movements in at least one type of manoeuvre situation by means of at least one sensor configuration for sensing changes in direction of said vehicle as a basis for said determination. The programme P comprises routines for identifying a type of manoeuvre from among negotiating a roundabout, turning at a road intersection and overtaking. The programme comprises routines for detecting a turn on the basis of data from said wheel speed sensor configuration 251. The programme comprises routines for determining a speed difference between right wheels and left wheels of the vehicle. The programme comprises routines for determining that a turn is in the same direction as the wheel with the lowest speed. The programme comprises routines for determining a measurement of the radius of curvature of the turn on the basis of the magnitude of the speed difference. The programme comprises routines for determining whether the vehicle is in right-hand traffic or left-hand traffic on the basis of said turning direction and said radius of curvature. The programme comprises routines for determining direction indicator activity Act of the vehicle and determining whether the vehicle is in right-hand traffic or left-hand traffic on the basis of said direction indicator activity Act. The programme comprises routines for determining clear changes in the vehicle's speed.

The computer programme P may be stored in an executable form or in compressed form in a memory 560 and/or a read/write memory 550.

Where the data processing unit 510 is described as performing a certain function, it means that it conducts a certain part of the programme stored in the memory 560 or a certain part of the computer programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is adapted to communicating with the data processing unit via a data bus 514. The data port may for example have the links L215, L251, L252, L253 and L254 connected to it (see Figure 2).

When data are received on the data port 599, they are stored temporarily in the second memory element 540. When input data received have been temporarily stored, the data processing unit 510 is prepared to conduct code execution as described above. In one version, signals received on the data port contain information about a prevailing speed of the vehicle 100. In one version signals received on the data port contain information about direction indicator activity Act of the vehicle. In one version signals received on the data port contain information about prevailing speeds of a suitable number of wheels of the vehicle, e.g. two, four or six of its wheels. In one version signals received on the data port contain information about prevailing steer (steering wheel angle) and/or steer rate of the vehicle. In one version signals received on the data port contain information about prevailing yaw or yaw rate.

The signals received on the data port 599 may be used by the device 500 to determine whether the vehicle is in right-hand traffic or left-hand traffic.

Parts of the methods herein described may be conducted by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive, nor to restrict the invention to the variants described. Many modifications and variations will obviously suggest themselves to one skilled in the art. The embodiments have been chosen and described in order best to explain the principles of the invention and their practical applications and thus make it possible for one skilled in the art to understand the invention for different embodiments and with the various modifications appropriate to the intended use.

## Claims

1. A method for automatically determining whether a vehicle is in left-hand traffic or right-hand traffic,
**characterised by** the step of
- detecting (s401) vehicle movements in at least one type of manoeuvre situation by means of at least one sensor configuration (251; 252; 253) for sensing changes in direction of said vehicle (100) as a basis for said determination.

2. A method according to claim 1, in which said at least one type of manoeuvre is chosen from among negotiating a roundabout, turning at a road intersection and/or overtaking.

3. A method according to claim 2, in which the manoeuvre of negotiating a roundabout is distinguished by a first turn in the same direction as the respective type of traffic, followed by a second turn in the opposite direction and a third turn in the same direction as said first turn.

4. A method according to any one of the foregoing claims, in which said at least one sensor configuration (251; 252; 253) is chosen from among wheel speed sensor configuration (251), yaw sensor (252) and/or steer sensor (253).

5. A method according to any one of the foregoing claims, in which a turn is detected by said wheel speed sensor configuration (251) as a speed difference between right wheels and left wheels, and said turn is determined to be in the same direction as the wheel with the lowest speed.

6. A method according to claim 5, in which the magnitude of the speed difference serves as a measurement of the radius of curvature (R1; R2) of the turn, and said turning direction and said radius of curvature (R1; R2) serve as a basis for said determination.

7. A method according to any one of the foregoing claims, in which the basis for said determination comprises direction indicator activity (Act) of the vehicle (100).

8. A method according to any one of the foregoing claims, in which the basis for said determination comprises clear changes in the vehicle's speed, e.g. decelerations and/or accelerations.

9. A device for automatically determining whether a vehicle is in left-hand traffic or right-hand traffic,
**characterised by**
- means (251; 252; 253; 200; 210; 500) for detecting vehicle movements in at least one type of manoeuvre situation, comprising at least one sensor configuration (251; 252; 253) for sensing changes in direction of said vehicle (100) as a basis for said determination.

10. A device according to claim 9, comprising
- means (200; 210; 500) for choosing said at least one type of manoeuvre from among negotiating a roundabout, turning at a road intersection and/or overtaking.

11. A device according to claim 10, comprising
- means (200; 210; 500) for determining the manoeuvre of negotiating a roundabout on the basis of vehicle movements which are distinguished by a first turn in the same direction as the respective type of traffic, followed by a second turn in the opposite direction and a third turn in the same direction as said first turn.

12. A device according to any one of claims 9-11, in which said at least one sensor configuration (251; 252; 253) comprises any from among wheel speed sensor configuration (251), yaw sensor (252) and/or steer sensor (253).

13. A device according to any one of claims 9-12, comprising
- means (251; 200; 210; 500) for detecting a turn as a speed difference between right wheels and left wheels, and
- means (200; 210; 500) for determining that said turn is in the same direction as the wheel with the lowest speed.

14. A device according to claim 13, comprising
- means (200; 210; 500) for taking the magnitude of the speed difference as a measurement of the radius of curvature of the turn, and
- means (200; 210; 500) for using said turning direction and said radius of curvature as a basis for said determination.

15. A device according to any one of claims 9-14, comprising
- means (200; 210; 500) for determining direction indicator activity (Act) of the vehicle, and
- means (200; 210; 500) for determining whether the vehicle is in left-hand traffic or right-hand traffic on the basis of its said direction indicator activity (Act) determined.

16. A method according to any one of claims 9-15, comprising
- means (254; 200; 210; 500) for determining clear changes in the vehicle's speed, and
- means (200; 210; 500) for determining whether the vehicle is in left-hand traffic or right-hand traffic on the basis of said clear changes in speed, e.g. decelerations and/or accelerations.

17. A motor vehicle (100; 110) provided with a device (299) according to any one of claims 9-16.

18. A motor vehicle (100; 110) according to claim 17, which vehicle is any from among truck, bus or car.

19. A computer programme (P) for determining whether a vehicle is in left-hand traffic or right-hand traffic, which programme (P) comprises programme code for causing an electronic control unit (200; 500) or another computer (210; 500) connected to the electronic control unit (200; 500) to perform steps according to any one of claims 1-8.

20. A computer programme product comprising a programme code stored on a computer-readable medium for performing method steps according to any one of claims 1-8 when said computer programme is run on an electronic control unit (200; 500) or another computer (210; 500) connected to the electronic control unit (200; 500).
